# EUROPÄISCHE PATENTANMELDUNG

(11) **EP 1 085 072 A2**
(43) Veröffentlichungstag der Anmeldung: **21.03.2001**
(21) Anmeldenummer: 00118248.4
(22) Anmeldetag: 04.09.2000
(51) Int. Cl.: C09J 179/08, C08L 79/08, C08G 73/10, C09D 193/00, C08L 93/00

(54) **Emissionsarmer, biologisch abbaubarer Klebstoff**

(30) Priorität: 15.09.1999 DE 19944159
(71) Anmelder: BAYER AG, 51368 Leverkusen (DE)
(72) Erfinder: Wendt, Hartwig, Dr., 50933 Köln (DE); Groth, Torsten, Dr., 51519 Odenthal (DE); Joentgen, Winfried, Dr., 50735 Köln (DE); Moritz, Ralf-Johann, Dr., 41469 Neuss (DE)

(57) **Zusammenfassung**

Die vorliegende Erfindung betrifft wasserlösliche, emissionsarme Klebstoffmischungen auf Basis von Polyasparaginsäure oder ihrer Salze und/oder Derivate und natürlichen Klebharzen sowie deren Verwendungen.

## Beschreibung

Die vorliegende Erfindung betrifft wasserlösliche, emissionsarme Klebstoffe auf Basis von Mischungen aus Polyasparaginsäure oder ihrer Salze und/oder Derivate mit natürlichen Klebharzen sowie deren Verwendungen.

Die Herstellung und Verwendung von Polyasparginsäuren ihrer Salze und ihrer Derivate ist seit langem Gegenstand zahlreicher Veröffentlichungen.

Als Polyasparaginsäuren kommen beispielsweise Polymere und Derivate in Betracht, die in der EP-A-0 650 995 beschrieben sind und deren Inhalt von der vorliegenden Anmeldung mit umfasst wird. Organische oder anorganische Salze der Polyasparaginsäuren sind als Inhaltsstoffe der erfindungsgemäßen Klebstoffmischungen gleichfalls möglich. Polyasparginsäuren, ihre Salze und/oder Derivate werden im folgenden unter dem Begriff PASP zusammengefasst. PASP sind in der Natur weit verbreitet.

Ihre Herstellung ist in zahlreichen Varianten in vielen Veröffentlichungen beschrieben worden. Biotechnologische Verfahren sind ebenso bekannt wie nasschemische, synthetische Herstellungswege. Beispielhaft seien hier nur genannt: US-A 839 461 (=EP-A 0256 366), US-A 4 590 260 und US-A 5 288 783.

Nach Stand der Technik unterscheidet man zwischen Klebstoffen auf natürlicher und synthetischer Rohstoff-Basis, wobei auch Kombinationen dieser Grundstoffe möglich sind.

Die Anzahl der synthetischen Grundstoffe ist fast unerschöpflich und lässt sich aufgrund der zusätzlichen Kombinationsmöglichkeiten schwer in ein abgegrenztes Schema einordnen. Üblicherweise werden die Klebstoffe in folgende Klassen eingeordnet:
1. Polyurethane
2. Epoxidharze
3. Harnstoffharze
4. Polychloroprene
5. Polyvinylacetate ― Homopolymere
6. Polyacrylate
7. Polymerdispersionsleime ― werden im allgemeinen wässrige Dispersionen der zuletzt definierten zwei Polymergruppen genannt. Sie sind in den meisten Fällen praktisch frei von Lösemitteln und anderen flüchtigen organischen Bestandteilen.

Unter dem Begriff 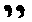 Polycarboxylate" versteht man im allgemeinen neben der Gruppe der Polyasparginsäuren und ihrer Derivate vor allem die Gruppe der Polyacrylsäuren, ihre Homo- und Copolymere und ihre Salze. Bei den Polyacrylaten handelt es sich in der Regel also um Acrylsäure-Homopolymere oder um Copolymere auf Basis Acrylsäure und Maleinsäure oder auf Basis Maleinsäure und Methylvinylether. Sie können sauren, neutralen oder basischen Charakter besitzen.

Polyasparaginsäuren und Polyacrylsäuren unterscheiden sich in vielfacher Hinsicht bezüglich ihres physiko-chemischen Verhaltens. Acrylat-Klebstoffe sind Klebstoffe auf Basis von Acryl-Monomeren, insbesondere von Acryl- und Methacrylsäureestern. Sie werden entweder monomer als Reaktionsklebstoffe eingesetzt, die während des Verklebungsprozesses polymerisieren, oder sie werden bereits polymer eingesetzt (Polyacrylate oder Polymethacrylate) in Form von Lösungs- bzw. Dispersionsklebstoffen.

In die erste Gruppe gehören unter anderem die unter Luftausschluss aushärtenden Methacrylsäureester, die unter Feuchtigkeitseinwirkung polymerisierenden Cyanacrylate und die Acrylatester-Klebstoffe im engeren Sinne. Diese bestehen aus einem (Meth)acryl-Monomeren, einem als Verdickungs- und Elastifizierungsmittel fungierenden Polymeren und einem die Polymerisation auslösenden Initiator, vorzugsweise einem Redoxinitiator. Sie werden als Zweikomponentenkleber in Kombination mit einer Aktivator-Lösung eingesetzt und können zur Verklebung sehr unterschiedlicher Substrate (unter anderem Metalle, Glas, Kunststoffe, Elastomere, Holz) verwendet werden. Mit ihnen hergestellte Klebverbunde zeichnen sich durch hohe Festigkeitswerte in einem weiten Temperaturbereich aus. Als Lösungs- und Dispersionsklebstoffe applizierte Acrylatester-Klebstoffe basieren dagegen vielfach auf polymeren Ethyl- und/oder Buthylacrylaten, deren mechanische Eigenschaften und deren Hafteigenschaften durch Einpolymerisieren geeigneter Comonomere mit zum Teil zusätzlichen funktionellen Gruppen wie Carboxyl-oder Hydroxyl-gruppen gezielt einstellbar sind. Sie sind als Haftklebstoffe zum Verkleben von Textilien, Leder, Kunststoffen und Metallen breit einsetzbar.

Wässrige Dispersionshaftklebstoffe auf Polyacrylatbasis sind bekannt. So beschreibt z.B. WO 98/56867 und die darin zitierte EP 0 490 191 A2 einen emissionsarmen wässrigen Dispersionsklebstoff auf Basis von Polyacrylaten mit Zusätzen klebrigmachender Harze, Weichmachern und weiteren Inhaltsstoffen.

Klebstoffe auf Basis von Polyacrylaten zeigen jedoch häufig eine Reihe von Mängeln:
1. Sie enthalten zur Verbesserung der Adhäsion im allgemeinen Vinylacetat. Vinylacetat hat jedoch den Nachteil, dass leicht Acetaldehyd abgespalten wird und es so zu einer Geruchsbelästigung kommen kann.
2. Ihre unzureichende biologische Abbaubarkeit, die ihre Verwendung im medizinischen Bereich, insbesondere bei der Orthopädie und Knochenchirugie beschränkt.
3. Neben der medizinischen Anwendung erlangen biologisch abbaubare Klebstoffe auf Basis natürlicher und synthetischer Polymere auch in modernen umweltverträglichen Technologien, z.B. auf dem Verpackungssektor, wachsendes Interesse. Herkömmliche Klebstoffe auf Basis Polyacrylat können diese Marktsegmente nicht bedienen.
4. Als ein weiterer Mangel wässriger Polyacrylat-Dispersionen sind in WO 98/56867 genannte weitere mögliche Inhaltsstoffe mit hohem Toxizitätspotential wie Formaldehyd oder Konservierungsmittel wie Benzisothiazolinon und Chlormethylisothiazolinon genannt.

Weiterhin beschreibt EP 0 810 323 die Verwendung eines Copolymerisats zur Behandlung von Papieroberflächen, das lediglich aus den Monomeren (Meth)acrylsäure und Maleinsäureanhydrid (MSA) hergestellt wird. Unter Umständen kann dabei das MSA durch Alkohole oder Amine modifiziert sein. Das Copolymer besitzt klebende Eigenschaften.

WO 97/38633 beschreibt die Verwendung von Copolymeren verschiedener Aminosäuren als Adhesionsklebstoffe im orthopädischen Bereich zur Verklebung beschädigten Gewebes. Unter anderem werden dabei Polymere der Asparaginsäure eingesetzt.

Ausgehend von diesem Stand der Technik bestand die Aufgabe der vorliegenden Erfindung darin, einen emissionsarmen wässrigen Klebstoff aus einem oder mehreren Inhaltsstoffen zu entwickeln, der neben vergleichbaren klebenden Eigenschaften biologisch abbaubar und toxikologisch unbedenklich ist.

Gegenstand der vorliegenden Erfindung sind biologisch abbaubare Klebstoffmischungen auf Basis von Polyasparaginsäure ihrer Salze und/oder ihrer Derivate mit natürlichen Klebharzen sowie deren Anwendung in medizinischen, technischen und industriellen Bereichen.

Die erfindungsgemäßen Klebstoffmischungen auf Basis von PASP und natürlichen Klebharzen erfüllen nicht nur die hohen Ansprüche hinsichtlich der, biologischen Abbaubarkeit, der toxikologischen Eigenschaften sowie eines günstigen Emissionsprofils, sondern zeigen darüber hinaus überraschenderweise
1. ein günstiges rheologisches Profil
2. eine deutlich verbesserte Verstreichbarkeit sowie
3. eine hervorragende Kohäsion (innere Festigkeit).

Weiterhin kann auf eine mikrobizide Ausrüstung des Klebstoffes weitestgehend verzichtet werden.

Als PASP im Sinne der vorliegenden Erfindung kommen dabei die PASP gemäß EP 0 650 995 infrage. Die vorliegende Erfindung betrifft bevorzugt Klebstoffmischungen als wässrige Dispersionen, enthaltend Polyasparaginsäure (PASP) und natürliche Klebharze, dadurch gekennzeichnet, dass der Wasseranteil zwischen 3 Gew.-% und 90 Gew.-%, bevorzugt zwischen 3 Gew.-% und 60 Gew.-%, besonders bevorzugt zwischen 3 Gew.-% und 50 Gew.-% beträgt. Das mittlere Molekulargewicht Mₙ liegt vorzugsweise über 400, insbesondere zwischen 500 und 100000.

Die erfindungsgemäßen Klebstoffmischungen enthalten neben PASP als natürliche Klebharze sogenannte klebrig machende Harze, wie sie z.B. aus Polym. Mater. Sci. Eng., 61 (1989), Seite 588 ― 592, prinzipell bekannt sind. Bei diesen natürlichen Klebharzen handelt es sich insbesondere um in Dispersion vorliegende natürliche Harzsäuren oder deren Ester, beispielsweise auf Basis der Diterpene, Triterpene oder Sesquiterpene. Das Gleichgewichtsverhältnis von erfindungsgemäßen PASP zu klebrig machendem Harz liegt vorzugsweise zwischen 5 zu 1 bis 1 zu 5.

Bevorzugt kommen als klebrig machende Harze natürliche Harze infrage. Beispielsweise können Acaroid-Harze, gelbe oder rote Harze von austral. Xanthorrhoea-Arten, Benzoeharze, Canadabalsam, China- oder Japanlack, Dammarharze, Drachenblut, Elemi, Labdanum, Mastix, Myrrhe, Perubalsam, Sandarak, Styrax, Tolubalsam, Venezianisches Terpentin oder Kolophonium, eingesetzt werden. Letzteres wird nach Art seiner Gewinnung in Balsamkolophonium, Wurzelharz und Tallharz unterteilt.

Die Löslichkeit der natürlichen Harze verändert sich mit zunehmendem Alter als Folge der bei der Alterung ablaufenden Verharzungsprozesse. Sie werden nach ihren Löslichkeitseigenschaften auch in die Klasse öllöslich ― z.B. Kopale und Bernstein ― bzw. alkohollöslich ― unter anderem Balsame und Kiefernharze (Kolophonium, Dammar, Sandarak, Manilakopale und Mastix) ― eingeteilt.

Die natürlichen Harze sind flüssige oder feste, amorphe und nicht kristallisierbare Produkte mit durchschnittlichen Molmassen unter 2000 g/mol.

Ihre Dichte liegt im Bereich von 0,9-1,3 kg/l. Harte natürliche Harze schmelzen im Temperatur-Bereich von ca. 40°C (Asa foetida) bis 360°C (Bernstein).

Chemisch gesehen sind die natürlichen Harze Gemenge aus sehr unterschiedlichen Substanzen wie Harzsäuren (Resinolsäuren), Harzalkoholen (Resinole), Estern von Harzsäuren und Harzalkoholen.

Die Harzsäuren sind leicht in Harzester und Harzseifen oder in Hartharze, die für Harzlacke größere Bedeutung haben, überführbar. Hohe Anteile von Harzsäuren enthaltende Koniferen-Harze, z.B. Kolophonium, können abhängig von ihrer Konstitution mit Dienen, Dienophilen, Alkoholen oder Phenolen modifiziert werden, beispielsweise zu Maleinat-Harzen oder sogenannten Kunstkopalen. Hydrierung der ungesättigten Harzsäuren führt zu Produkten mit Klebstoff- oder Weichmacher-Eigenschaften.

Die natürlichen Harze der im Handel befindlichen sogenannten Naval Stores stammen meist aus Kiefernholz. Sie werden eingeteilt in Balsamharze (Kolophonium und Terpentin aus lebenden Bäumen), Wurzelharze (aus Stubben extrahierte Harze) und Tallharze, die aus Tallöl gewonnen werden, und die bei Cellulose-Aufschlussverfahren anfallen.

Als weitere Zusätze können die erfindungsgemäßen wässrigen Dispersionen übliche Mengen an Verdickungsmitteln, Netzmitteln, Entschäumer, Filmbildner oder Pigmenten enthalten. Ferner können für Klebstoffe übliche Füllstoffe, insbesondere anorganische oder organische Füllstoffe als Zusätze verwendet werden.

Weiterhin kommen als Zusätze wasserlösliche biologisch abbaubare Lösemittel in Frage, beispielsweise Ethanol, Glycole, Glycolether, die wasserlöslichen Glycerinderivate aus der Gruppe bestehend aus Glycerinaldehyd, Glycerinsäure und deren Ester, Glycerinester, Diacetin und Monoacetin.

Zur Herstellung von Haftklebeerzeugnissen können die Dispersionen in üblicher Weise, beispielsweise durch Spritzen, Rakeln, Rollen, Gießen, Walzen oder Tauchen auf geeignete Substrate aufgetragen werden.

Die erfindungsgemäß hergestellten Klebstoffmischungen auf Basis von PASP und natürlichen Harzen eignen sich überraschenderweise besonders gut zur Verklebung harter, weicher oder elastischer Oberflächen.

Sie können in der Papierindustrie, in der Holzindustrie, in der Textilindustrie, in der Automobilindustrie, in der Kunststoffindustrie, in der Metallindustrie, in der Elektroindustrie, in der Verpackungsindustrie, in der Lederindustrie, in der Bauindustrie oder in der Kosmetikindustrie verwendet werden.

Beispielsweise kann man die erfindungsgemäß hergestellten Klebstoffmischungen zur Verklebung von Flaschenetiketten, Haftmerkzetteln, Briefumschlägen oder Briefmarken verwenden. Sie eignen sich zum Verkleben von Kunststoffen, Elastomeren und Weichschaumstoffen oder als Inhaltsstoffe in Windeln und anderen Hygieneartikeln wie Binden.

Weiterhin ist es möglich, damit Glas, Metalle, Spanplatten oder Sperrholzplatten zu verkleben. Keramik, Kork, Gummi oder Filz können ebenso verklebt werden. Man kann die erfindungsgemäß hergestellten Klebstoffmischungen in der Montageklebung, zur Herstellung von Klebebändern, im Holzleimbau, beim Funieren, in der Parkettherstellung, Brettfugenverleimung, Stäbchenverleimung oder in der Korpus-, Gestell- und Dübelverleimung einsetzen.

Die erfindungsgemäß auf Basis von PASP und natürlichen Klebharzen hergestellten Klebstoffmischungen können zur Wundbehandlung sowie zur Gewebe- und Knochenverklebung in der Veterinär- und Humanmedizin verwendet werden.

Weiterhin sind die erfindungsgemäß hergestellten Klebstoffmischungen auf Basis von PASP und natürlichen Klebstoffen überraschenderweise besonders gut geeignet zum Strukturaufbau von Materialien wie Holz, Textilien oder Kunststoffen. So lassen sich mit Hilfe der erfindungsgemäßen Klebstoffmischungen zum Beispiel Spannplatten oder Kunststoffplatten pressen.

### Beispiel einer Klebstoff-Formulierung

| Lfd. Nr. | Komponenten | Anteil (%) |
|---|---|---|
| (1) | Polyasparaginsäure-Natrium-Salz | 45 |
| (2) | Kreide | 7 |
| (3) | Glycol | 7 |
| (4) | Natürliche Harzsäureester | 15 |
| (5) | Wasser | Rest zu 100 % |

### Herstellvorschrift

### Klebstoff nach Beispiel 1

1. Feststoff (1) im Mischbehälter vorlegen und Rührwerk anstellen.
2. (2) und (3) zugeben, kurz einrühren.
3. Die Hälfte des beizufügenden Wassers (5) zugeben und glattrühren.
4. Unter kräftigem Rühren die auf 80°C erwärmten Harze (4) in den Ansatz geben und homogenisieren.

Der nach Beispiel 1 hergestellte Klebstoff zeigt die erfindungsgemäß genannten Vorteile.

## Patentansprüche

1. Wasserlösliche, biologisch abbaubare Klebstoffmischungen, dadurch gekennzeichnet, dass diese aus Polyasparaginsäure, ihren Salzen und/oder Derivaten (PASP) mit natürlichen Klebharzen bestehen.

2. Wasserlösliche Klebstoffmischungen nach Anspruch 1, dadurch gekennzeichnet, dass der Wasseranteil zwischen 3 Gew.-% und 90 Gew.-% liegt.

3. Wasserlösliche Klebstoffmischungen nach Anspruch 1 und 2, dadurch gekennzeichnet, dass als weiterer Zusatz ein wasserlösliches, biologisch abbaubares Lösemittel verwendet wird.

4. Wasserlösliche Klebstoffmischungen gemäß Anspruch 1, dadurch gekennzeichnet, dass als natürliche Klebharze natürliche Harzsäuren oder deren Ester eingesetzt werden.

5. Wasserlösliche Klebstoffmischungen gemäß Anspruch 4, dadurch gekennzeichnet, dass als natürliche Harzsäuren oder deren Ester Acaraoid Harze, gelbe oder rote Harze von austral. Xanthorrhoea-Arten, Benzoeharze, Canadabalsam, China- oder Japanlack, Dammarharze, Drachenblut, Elemi, Labdanum, Mastix, Myrrhe, Perubalsam, Sandarak, Styrax, Tolubalsam, Venezianisches Terpentin oder Kolophonium eingesetzt werden.

6. Verwendung der Klebstoffmischungen gemäß Anspruch 1 als Inhaltsstoff in Windeln und anderen Hygieneartikeln wie Binden.

7. Verwendung von PASP und natürlichen Klebharzen zur Herstellung von Klebstoffmischungen zur Wundbehandlung sowie zur Gewebe- und Knochenbehandlung in der Veterinär- und Humanmedizin.

8. Verwendung von PASP und natürlichen Klebharzen zur Herstellung von Klebstoffmischungen zum Strukturaufbau von Materialien.

9. Verwendung von Klebstoffmischungen auf Basis von PASP und natürlichen Klebharzen in der Papierindustrie, in der Textilindustrie, in der Holzindustrie, in der Automobilindustrie, in der Kunststoffindustrie, in der Metallindustrie, in der Elektroindustrie, in der Verpackungsindustrie, in der Lederindustrie, in der Bauindustrie oder in der Kosmetikindustrie.

10. Verfahren zur Verklebung harter, weicher oder elastischer Oberflächen, dadurch gekennzeichnet, dass die zu verwendenden Klebstoffmischungen PASP und natürliche Klebharze enthalten.

11. Verfahren zur Herstellung von Klebstoffmischungen auf Basis von PASP und natürlichen Klebharzen, dadurch gekennzeichnet, dass man PASP vorlegt, Hilfsstoffe mit Wasser hinzufügt und unter Rühren schließlich die natürlichen Klebharze in den Ansatz gibt und homogenisiert.
